# EUROPÄISCHE PATENTSCHRIFT

(11) **EP 2 281 125 B1**
(45) Veröffentlichungstag und Bekanntmachung des Hinweises auf die Patenterteilung: **23.03.2016**
(21) Anmeldenummer: 09753546.2
(22) Anmeldetag: 26.05.2009
(51) Int. Cl.: F16C 19/52

(54) **LAGERVORRICHTUNG MIT POSITIONSGEBER**
BEARING DEVICE HAVING POSITION INDICATOR
DISPOSITIF PALIER DOTÉ D'UN CAPTEUR DE POSITION

(30) Priorität: 30.05.2008 DE 102008026081
(43) Veröffentlichungstag der Anmeldung: 09.02.2011
(73) Patentinhaber: Schaeffler Technologies AG & Co. KG, 91074 Herzogenaurach (DE)
(72) Erfinder: KRAM, Martin, 97447 Gerolzhofen (DE)
(86) Internationale Anmeldenummer: PCT/DE2009/000749
(87) Internationale Veröffentlichungsnummer: WO 2009/143830

(56) Entgegenhaltungen:
- JP-A- 8 312 642
- JP-A- H07 190 071
- JP-A- 2006 029 517
- US-A- 2 880 293
- US-A- 2 926 321
- US-A- 3 445 802

## Beschreibung

Die Erfindung betrifft eine Lagervorrichtung nach dem Oberbegriff von Anspruch 1 mit einem Positionsgeber. Eine solche Lagervorrichtung ist z.B. aus der JP 407 190 071 vorbekannt.

Aus der Praxis ist bekannt, die Stellung der beiden Lagerringe bzw. Lagerteile eines Lagers relativ zueinander zu erfassen. Beispielsweise kann bei einem rotativen Lager mit zwei Lagerringen einem der beiden Lagerringe eine umlaufende magnetische Codierung zugeordnet sein, und dem anderen der beiden Lagerringe ein magnetischer Sensor, der die Änderung des Magnetfeldes der magnetischen Codierung bei der relativen Bewegung der beiden Lagerringe zueinander erfasst und ein digitales Ausgangssignal liefert. Aus diesem digitalen Ausgangssignal lässt sich nur mit großem Aufwand die relative Stellung der beiden Lagerringe zueinander berechnen; auch treten aufgrund der Digitalisierung des Signals Ungenauigkeiten bei der Ortsauflösung auf.

JP 2004308724 AA (Abstract) beschreibt ein rotatives Wälzlager mit einem Rotationssensor, wobei zusätzlich zu den beiden als Lagerringe ausgebildeten Lagerteilen an einem Wälzkörperkäfig eine magnetische Codierung vorgesehen ist, die in Umfangsrichtung ihre Magnetisierung ändert. Der magnetischen Codierung gegenüber angeordnet ist ein magnetischer Sensor, der ein der absoluten Stellung der beiden Lagerringe analoges Ausgangssignal liefert. Ein derartiger Positionsgeber ist aufwendig ausgestaltet, erfordert eine elektronische Nachbearbeitung des Signals und bietet nur eine geringe räumliche Auflösung. Außerdem lassen sich bestehende Lager, insbesondere Wälzlager, nicht ohne weiteres nachrüsten.

DE 203 16 544 U1 beschreibt ein rotatives Wälzlager mit einer Überwachungsvorrichtung mit einem Sensor, der die Relativbewegung der beiden als Lagerringe des Wälzlagers ausgebildeten Lagerteile erfasst. Der nicht näher beschriebene Sensor ist als berührungslos arbeitender Wegmeßsensor ausgebildet.

JP 2006029517 AA (Abstract) beschreibt ein rotatives Wälzlager mit zwei als Lagerringe ausgebildeten Lagerteilen und einem Rotationssensor, der die relative Drehung der beiden Lagerringe zueinander erfasst. Der Rotationssensor ermittelt einen Wirbelstrom an der Fläche eines der beiden Lagerringe, der durch eine den anderen der beiden Lagerringe umgebende, exzentrisch zu der Drehachse ausgebildete magnetische Struktur hervorgerufen wird, sobald sich die beiden Lagerringe zueinander drehen. Eine absolute Positionsmessung mit einem analogen Ausgangssignal ist auf diese Weise nicht möglich.

Die nachveröffentlichte Anmeldung DE 10 2008 008 727.0, angemeldet am 12. Februar 2008, beschreibt Lager, umfassend ein erstes Lagerteil, ein relativ zu dem ersten Lagerteil bewegliches zweites Lagerteil und einen Positionsgeber, der ein der relativen Stellung der beiden Lagerteile entsprechendes analoges Signal liefert, wobei der Positionsgeber ein Potentiometer umfasst, das eine Widerstandsbahn und einen Positionsfinger aufweist, wobei die Widerstandsbahn mit dem ersten Lagerteil drehfest verbunden und der Positionsfinger mit dem zweiten Lagerteil drehfest verbunden ist.

Die vorgenannten Druckschriften bzw. die vorgenannte nachveröffentlichte Anmeldung beschreiben jeweils zweiteilige Lager, wobei an jedem der beiden Lagerteile eine bauliche Abänderung vorzusehen ist, um den Positionsgeber auszubilden.

DE 10 2005 007 776 A1 beschreibt eine Lagervorrichtung mit einer Lageraufnahme, in der ein Lager aufgenommen ist, wobei das Lager als ein rotatives Lager mit zwei Lagerringe ausgebildet ist, wobei an dem feststehenden der beiden Lagerringe drei nicht näher beschriebenen Messwertaufnehmer zur Ermittlung der Stellung des Lagerrings gegenüber der Lageraufnahme angeordnet sind. Die Messwertaufnehmer sind dabei entlang des Umfangs des Lagerrings räumlich beabstandet angeordnet und greifen die Stellung des Lagerrings gegenüber der Lageraufnahme nur an drei Punkten entlang des Umfangs des Lagerrings ab. Die Ausgangswerte der Messwertaufnehmer dienen zur Nachjustierung der Stellung des Lagers in der Lageraufnahme.

### Aufgabe der Erfindung

Es ist die Aufgabe der Erfindung, eine Lagervorrichtung mit einem Positionsgeber anzugeben, die eine sichere Erfassung der relativen Stellung des Lagers in der Lagervorrichtung sowie eine Erfassung der Stellung der Lagerteile des Lagers zueinander auf einfache Weise ermöglicht.

### Zusammenfassung der Erfindung

Diese Aufgabe wird erfindungsgemäß durch eine Lagervorrichtung nach Anspruch 1 gelöst.

Sofern im folgenden die Erfindung anhand von Lagerringen als Bestandteile eines rotativen Lagers erläutert wird, versteht es sich, dass die Beschreibung sinngemäß auf Linearlager zu übertragen ist.

Der Positionsgeber weist dabei ein Potentiometer auf, dessen Bestandteile, Positionsfinger und Widerstandsbahn, mit den beiden Lagerringen drehfest verbunden sind, so dass eine Änderung der relativen Stellung der beiden Lagerringe zueinander eine Änderung der elektrischen Eigenschaften des Potentiometers bewirkt. Wird das Potentiometer als Spannungsteiler angesehen, entspricht jeder Stellung der Lagerringe zueinander, speziell auch jedem Drehwinkel, den die Lagerringe miteinander bilden, ein bestimmter Spannungswert. Weitere den Betrieb des Lagers charakterisierende Kenngrößen wie Drehzahl, Beschleunigung, Drehrichtung (bei Rotativlagern) oder zurückgelegter Weg bzw. Richtung (bei Linearlagern) lassen sich leicht ableiten, sofern die Stellung der Lagerringe zu verschiedenen Zeitpunkten erfasst wird.

Ein bestimmter Abschnitt des Potentiometers, beispielsweise einer von dessen Endpunkten, lässt sich derart auszeichnen, dass auf dem ersten Lagerring eine Stelle ausgewiesen ist, die eine absolute Positionsbestimmung erlaubt, insbesondere, wenn der erste Lagerring bezüglich einer das Lager insgesamt aufnehmenden Lageraufnahme feststehend angeordnet ist.

Die Anordnung des Positionsfingers an das bezüglich des ersten Lagerteils feststehende Teil des Lagers und der Widerstandsbahn an die Lageraufnahme ermöglicht, bei einem zwei- oder mehrteiligen Lager nur eines der Lagerteile zu modifizieren, so dass weitere Lagerteile des Lagers nicht umgebaut zu werden brauchen. Entsprechendes gilt auch für den Fall, dass der Positionsfinger an der Lageraufnahme und die Widerstandsbahn an das erste Lagerteil angeordnet ist. Es ist in beiden Fällen möglich, sowohl die Stellung des ersten Lagerteils relativ zu den anderen Teilen des Lagers als auch relativ zu der Lageraufnahme zu erfassen, insbesondere, da erfindungsgemäß das Lager ein zweites Lagerteil umfasst, das an der Lageraufnahme feststehend angeordnet ist.

Vorzugsweise ist vorgesehen, dass das Potentiometer als Folienpotentiometer ausgebildet ist. Folienpotentiometer sind kleinbauend und weisen eine Dicke von typischerweise weniger als ca. 0,5 mm auf, so dass diese auch auf gekrümmten Flächen wie auf der inneren Mantelfläche eines äußeren Lagerrings eines Lagers befestigt werden können. Folienpotentiometer sind im Betrieb sehr robust und zuverlässig, auch lassen sich bereits bestehende Wälz- oder Gleitlager mit Folienpotentiometern leicht nachrüsten. Der Kontakt zwischen den beabstandeten Leiterbahnen des Folienpotentiometers kann auf mechanische Art durch Aneinanderdrücken der Leiterbahnen geschlossen werden; es versteht sich aber, dass auch magnetische Foliensensoren vorgesehen sein können.

Erfindungsgemäß ist vorgesehen, dass das Lager als Wälz- oder Gleitlager ausgebildet ist, wobei das erste Lagerteil als erster Lagerring und das zweite Lagerteil als zweiter Lagerring ausgebildet ist. In diesem Fall führt das Lager vor allem eine Drehbewegung aus, so dass der Positionsfinger an seinem Ende in einer Ebene geführt wird.

Weist das Lager einen Lagerring auf, ist vorzugsweise vorgesehen, dass der Positionsfinger senkrecht zu einer Stirnfläche des ersten Lagerringes angeordnet ist. Der Positionsfinger kann dabei einen Spalt überbrücken, der zwischen der Stirnfläche des ersten Lagerrings und der Lageraufnahme angeordnet ist, und der bei der Montage des Lagers in der Lageraufnahme eingestellt wird. Weiter lässt sich der Positionsfinger an der Stirnfläche des Lagerrings anordnen, ohne wesentliche bauliche Veränderungen an dem ersten Lagerring vornehmen zu müssen; insbesondere können der Positionsfinger und die Widerstandsbahn auch nachträglich eingebaut werden.

Weitere Vorteile und Merkmale der Erfindung ergeben sich aus den abhängigen Ansprüchen sowie aus der Beschreibung eines Ausführungsbeispiels.

Die Erfindung wird nachstehend unter Bezugnahme auf die anliegende Zeichnung näher beschrieben und erläutert.

### Kurze Beschreibung der Zeichnungen

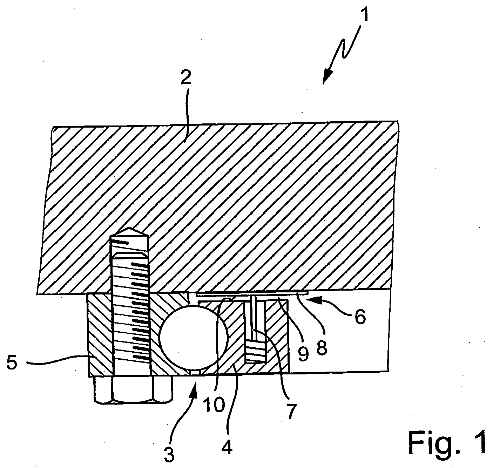

- Fig.1: zeigt schematisch einen Querschnitt durch ein Ausführungsbeispiel einer erfindungsgemäßen Lagervorrichtung.

### Detaillierte Beschreibung der Zeichnung

Fig. 1 zeigt eine Lagervorrichtung 1, umfassend eine Lageraufnahme 2 und ein Lager 3, das als Wälzlager ausgebildet ist. Das Lager 3 umfasst zwei Lagerteile, nämlich ein als Innenring ausgebildetes erstes Lagerteil 4, und ein als Außenring ausgebildetes zweites Lagerteil 5. Das zweite Lagerteil 5 ist mittels einer Schraube fest an der Lageraufnahme 2 angeordnet, während das erste Lagerteil 4 bezüglich des zweiten Lagerteils 5 und der Lageraufnahme 2 beweglich, insbesondere drehbar, angeordnet ist.

Die Lagervorrichtung 1 umfasst weiter einen Positionsgeber 6, der die Stellung des ersten Lagerteils 4 relativ zu der Lageraufnahme 2 und relativ zu dem zweiten Lagerteil 5 als analoges Signal erfassen lässt. Der Positionsgeber 6 ist als Potentiometer ausgebildet und umfasst einen Positionsfinger 7 und eine Widerstandsbahn 8. Der Positionsfinger 7 ist an dem ersten Lagerteil 4 fest angeordnet. Die Widerstandsbahn 8 ist an der Lageraufnahme 2 befestigt. Die Widerstandsbahn 8 ist über einen Spalt 9 von einer Stirnfläche 10 des ersten Lagerteils 4 getrennt. Diesen Spalt 9 überbrückt der Positionsfinger 7 derart, dass ein Kontakt in der Widerstandsbahn 8 entsteht und ein - von der Stellung des Positionsfingers 7 relativ zu der Lageraufnahme 2 bzw. zu dem zweiten Lagerteil 5 abhängiges - elektrisches Signal, beispielsweise als Spannung, abgegriffen werden kann. Insbesondere ist das Potentiometer als Folienpotentiometer ausgebildet, wobei sowohl eine Ausbildung als elektrisches wie auch als magnetisches Folienpotentiometer geeignet ist.

Das erste, als Innenring des Wälzlagers 3 ausgebildete Lagerteil 4 nimmt einen Endabschnitt einer nicht näher dargestellten Welle auf, der an der Lageraufnahme 2 gelagert wird.

Der Positionsfinger 7 ist in dem Korpus des ersten Lagerteils 4 aufgenommen und steht über die Stirnfläche 10 über. Es versteht sich, dass in einem alternativen Ausführungsbeispiel der Positionsfinger 7 auch an der Außenfläche des Korpus des ersten Lagerteils 4 angeordnet sein kann; ebenso kann vorgesehen sein, dass der Positionsfinger 7 an der äußeren Mantelfläche des ersten Lagerteils 4 angeordnet ist.

Die Erfindung wurde vorstehend anhand eines Ausführungsbeispiels beschrieben, bei dem das Lager 3 als Wälzlager ausgebildet war. Es versteht sich, dass die Erfindung ebenfalls für andere Lagertypen, beispielsweise für Gleitlager, Gelenklager oder Linearführungen, vorgesehen sein kann.

Bei dem vorstehend beschriebenen Ausführungsbeispiel war vorgesehen, dass der Positionsfinger 7 an dem ersten Lagerteil 4 und die Widerstandsbahn 8 an der Lageraufnahme 2 angeordnet war. Es versteht sich, dass der Positionsfinger 7 auch an der Lageraufnahme 2 und die Widerstandsbahn 8 an dem ersten Lagerteil 4 angeordnet sein kann.

Bei dem vorstehend beschriebenen Ausführungsbeispiel beschreibt der Positionsfinger 7 auf der Widerstandsbahn 8 im wesentlichen eine Kreis- oder Kreissegmentbahn mit annähernd konstantem Abstand von der Achse des Lagers 3. Der Länge des Kreissegmentes entspricht dabei die Stellung des Positionsfingers 7 und damit des ersten Lagerteils 4 relativ zu der Lageraufnahme 2. Es versteht sich, dass der Positionsfinger 7 auch einen radial sich ändernden Abstand von der Drehachse aufweisen kann. Insbesondere ist nicht zwingend erforderlich, dass die Widerstandsbahn 8 zu der Drehachse des Lagers 3 einen festen Abstand aufweist. Speziell kann vorgesehen sein, dass die Widerstandsbahn 8 zwar kreis- oder kreissegmentförmig ausgebildet ist, allerdings der Kreismittelpunkt der Widerstandsbahn 8 einen Abstand von der Drehachse des Lagers 3 enthält. Bewegt sich das erste Lagerteil 3 relativ zu der Lageraufnahme 2, erfährt der Positionsfinger 7 nicht nur eine Verschiebung in Umfangsrichtung der Widerstandsbahn 8, sondern auch in radialer Richtung. Auf diese Weise lassen sich über zwei verschiedenen Messgrößen die Stellung des Positionsfingers 7 ermitteln, wobei die beiden Messgrößen zur gegenseitigen Kontrolle bzw. Eichung herangezogen werden können.

Bei dem vorstehend beschriebenen Ausführungsbeispiel war die Widerstandsbahn 8 im wesentlichen parallel zu der Stirnfläche 10 des ersten Lagerteils 4 und damit im wesentlichen eben ausgebildet. Es versteht sich, dass die Widerstandsbahn 8 auch in axialer Richtung gekrümmt ausgebildet sein kann, um eine Verkippung des ersten Lagerteils 4 relativ zu dem zweiten Lagerteil 5 bzw. zu der Lageraufnahme 2 erfassen zu können. Es versteht sich ferner, dass die radiale Erstreckung der Widerstandsbahn 8 nicht der radialen Erstreckung der Stirnfläche 10 des ersten Lagerteils 4 zu entsprechen braucht. Bei Bedarf kann die Widerstandsbahn 8 schmal im Vergleich zu der radialen Erstreckung der Stirnfläche 10 des ersten Lagerteils 4 ausgebildet sein.

### Bezugszeichenliste

- 1: Lagervorrichtung
- 2: Lageraufnahme
- 3: Lager
- 4: erstes Lagerteil
- 5: zweites Lagerteil
- 6: Positionsgeber
- 7: Positionsfinger
- 8: Widerstandsbahn
- 9: Spalt
- 10: Stirnfläche

## Patentansprüche

1. Lagervorrichtung mit einem Positionsgeber, umfassend eine Lageraufnahme (2), und ein in der Lageraufnahme (2) angeordnetes Lager (3) mit einem bezüglich der Lageraufnahme (2) beweglichen ersten Lagerteil (4), wobei der Positionsgeber (6) ein Potentiometer mit einer Widerstandsbahn (8) und einem Positionsfinger (7) umfasst, wobei das Lager (3) ein zweites Lagerteil (5) umfasst, das an der Lageraufnahme (2) feststehend angeordnet ist,
wobei das Lager (3) als Wälz- oder Gleitlager ausgebildet ist, wobei das erste Lagerteil (4) als erster Lagerring und das zweite Lagerteil (5) als zweiter Lagerring ausgebildet ist,
**dadurch gekennzeichnet, dass** die Widerstandsbahn (8) dem einen von Lageraufnahme (2) und ersten Lagerteil zugeordnet ist, und dass der Positionsfinger (7) dem anderen von Lageraufnahme und ersten Lagerteil (4) zugeordnet ist.

2. Lagervorrichtung nach Anspruch 1, **dadurch gekennzeichnet, dass** das Potentiometer als Folienpotentiometer ausgebildet ist.

3. Lagervorrichtung nach Anspruch 1 oder 2, **dadurch gekennzeichnet, dass** der Positionsfinger (7) senkrecht zu einer Stirnfläche (10) des ersten Lagerrings (4) angeordnet ist.

4. Verwendung eines Folienpotentiometers in einer Lageranordnung (1) nach einem der Ansprüche 1 bis 3 als Positionsgeber (6) mit einem analogen Ausgangssignal.

## Claims

1. Bearing device having a position indicator, comprising a bearing receptacle (2) and a bearing (3) which is arranged in the bearing receptacle (2) and has a first bearing part (4) which can move relative to the bearing receptacle (2), wherein the position indicator (6) comprises a potentiometer with a resistor track (8) and a position finger (7), wherein the bearing (3) comprises a second bearing part (5) which is arranged in fixed fashion on the bearing receptacle (2), wherein the bearing (3) is embodied as a roller bearing or slider bearing, wherein the first bearing part (4) is embodied as a first bearing ring, and the second bearing part (5) is embodied as a second bearing ring, **characterized in that** the resistor track (8) is assigned to either the bearing receptacle (2) or the first bearing part, and **in that** the position finger (7) is assigned to the other of the bearing receptacle and first bearing part (4).

2. Bearing device according to Claim 1, **characterized in that** the potentiometer is embodied as a film potentiometer.

3. Bearing device according to Claim 1 or 2, **characterized in that** the position finger (7) is arranged perpendicularly with respect to an end face (10) of the first bearing ring (4).

4. Use of a film potentiometer in a bearing arrangement (1) according to one of Claims 1 to 3 as a potentiometer (6) with an analog output signal.

## Revendications

1. Dispositif palier avec un capteur de position, comprenant un logement de palier (2) et un palier (3) disposé dans le logement de palier (2) avec une première partie de palier (4) déplaçable par rapport au logement de palier (2), le capteur de position (6) comprenant un potentiomètre avec une bande résistante (8) et un doigt de positionnement (7), le palier (3) comprenant une deuxième partie de palier (5) qui est disposée fixement au niveau du logement de palier (2),
le palier (3) étant réalisé sous forme de palier à roulement ou de palier lisse, la première partie de palier (4) étant réalisée sous forme de première bague de palier et la deuxième partie de palier (5) étant réalisée sous forme de deuxième bague de palier,
**caractérisé en ce que** la bande résistante (8) est associée à l'un du logement de palier (2) et de la première partie de palier, et **en ce que** le doigt de positionnement (7) est associé à l'autre du logement de palier et de la première partie de palier (4).

2. Dispositif palier selon la revendication 1, **caractérisé en ce que** le potentiomètre est réalisé sous forme de potentiomètre à film.

3. Dispositif palier selon la revendication 1 ou 2, **caractérisé en ce que** le doigt de positionnement (7) est disposé perpendiculairement à une surface frontale (10) de la première bague de palier (4).

4. Utilisation d'un potentiomètre à film dans un agencement de palier (1) selon l'une quelconque des revendications 1 à 3, en tant que capteur de position (6) avec un signal de sortie analogique.
